# EUROPÄISCHE PATENTSCHRIFT

(11) **EP 1 658 621 B1**
(45) Veröffentlichungstag und Bekanntmachung des Hinweises auf die Patenterteilung: **24.09.2008**
(21) Anmeldenummer: 04740349.8
(22) Anmeldetag: 25.06.2004
(51) Int. Cl.: G21C 9/004

(54) **KERNTECHNISCHE ANLAGE UND VERFAHREN ZUR DRUCKENTLASTUNG EINER KERNTECHNISCHEN ANLAGE**
NUCLEAR PLANT AND METHOD FOR DECOMPRESSING A NUCLEAR PLANT
INSTALLATION NUCLEAIRE ET PROCEDE DE DECOMPRESSION D'UNE INSTALLATION NUCLEAIRE

(30) Priorität: 25.06.2003 DE 10328774
(43) Veröffentlichungstag der Anmeldung: 24.05.2006
(73) Patentinhaber: AREVA NP GmbH, 91052 Erlangen (DE)
(72) Erfinder: ECKARDT, Bernd, 63486 Bruchköbel (DE); FEUERBACH, Robert, 65830 Kriftel (DE)
(74) Vertreter: Walkenhorst, Andreas
(86) Internationale Anmeldenummer: PCT/EP2004/006946
(87) Internationale Veröffentlichungsnummer: WO 2004/114320

(56) Entgegenhaltungen:
- EP-A- 0 285 845
- EP-A- 0 507 155
- DE-A- 4 141 496
- US-B1- 6 280 502
- US-B1- 6 513 345
- DATABASE WPI Section Ch, Week 199341 Derwent Publications Ltd., London, GB; Class J01, AN 1993-327081 XP002309566 & SU 1 768 242 A1 (MOSC BAUMAN TECH COLLEGE POWER EQUIP) 15. Oktober 1992 (1992-10-15)

## Beschreibung

Die Erfindung bezieht sich auf eine kerntechnische Anlage mit einer Sicherheitshülle, an die eine Druckentlastungsleitung angeschlossen ist. Sie betrifft weiter ein Verfahren zur Druckentlastung einer derartigen Anlage.

In einem Kernkraftwerk muss bei Stör- oder Unfallsituationen, abhängig vom jeweiligen Störfall und von gegebenenfalls eingeleiteten Gegenmaßnahmen wie beispielsweise Inertisierung der Containment-Atmosphäre, mit einer möglicherweise signifikanten Druckerhöhung innerhalb der Sicherheitshülle gerechnet werden.
Um daraus möglicherweise resultierende strukturelle Beeinträchtigungen der Sicherheitshülle oder des Containments an sich oder auch von darin angeordneten Systemkomponenten zu vermeiden, können Kernkraftwerke für eine bedarfsweise Druckentlastung des Containments durch Ablassen von Containment-Atmosphäre (Venting) ausgelegt sein. Dazu ist üblicherweise an die Sicherheitshülle einer kerntechnischen Anlage eine Druckentlastungsleitung angeschlossen. Solche Containments weisen üblicherweise geringe Leckraten von z.B. <0.1 % /d auf, so dass nur geringste Freisetzungen über Leckagen in die Umgebung, auch in solchen Unfallsituationen, auftreten. Andere Containments, wie z.B. die russischer Bauart des Types WWER 440, weisen jedoch signifikante Undichtheiten von z. B. 20 - 100 Gew.% pro Tag auf, so dass die beschriebene Überdruck-Ventingtechnik, wegen der permanent ungefilterten Leckagen, nicht anwendbar ist

In der Containment-Atmosphäre ist jedoch üblicherweise radioaktives Material, wie beispielsweise Edelgase, Jod oder Aerosol, enthalten, das bei einem Venting in die Umgebung des Kernkraftwerks gelangen könnte. Insbesondere bei vergleichsweise schweren Störfällen mit möglicherweise eintretender Kernschmelze können luftgetragene Aktivitätsmengen (Aerosole) innerhalb des Containments in besonders hohen Konzentrationen auftreten, so dass beim Vorhandensein hoher Undichtigkeiten oder bei der Entstehung unzulässiger Überdrucksituationen eine freisetzung signifikanter Mengen derartiger Aerosole oder Aktivitätsmengen in die Umgebung der kerntechnischen Anlage eintreten könnte. Derartige luftgetragene Aktivitäten könnten insbesondere aufgrund der hohen Halbwertszeiten möglicherweise mitgeführter Komponenten wie beispielsweise Jod- oder Cäsium-Isotopen eine vergleichsweise lange Zeit andauernde Landkontamination verursachen. Um dies zu vermeiden, sind die für ein Venting der Containment-Atmosphäre vorgesehenen Druckentlastungssysteme üblicherweise mit Filter- oder Rückhalteeinrichtungen versehen, die eine Freisetzung von in der Containment-Atmosphäre mitgeführten luftgetragenen Aktivitätsmengen an die Umgebung unterbinden sollen.

Zu diesem Zweck ist beispielsweise aus der EP 0 285 845 B1 ein Konzept zur Druckentlastung eines Kernkraftwerks bekannt, bei dem in eine an die Sicherheitshülle des Kernkraftwerks angeschlossene Druckentlastungsleitung in Reihe ein als Filter zur Rückhaltung luftgetragener Aktivitäten vorgesehener Venturiwäscher sowie eine Drosseleinrichtung geschaltet sind. Der Venturiwäscher umfasst dabei eine Anzahl von in einer in einem Behälter vorgehaltenen Waschflüssigkeit angeordneten Venturirohren, die mit dem in der Druckentlastungsleitung geführte Gasstrom beaufschlagbar sind.

Die Venturirohre umfassen dabei jeweils eine düsenartig ausgebildete Verengungsstelle, an der der durchströmende Gasstrom auf eine besonders hohe Strömungsgeschwindigkeit beschleunigt wird. Im Bereich dieser Verengungsstelle sind Zutrittsöffnungen für die Waschflüssigkeit vorgesehen, wobei die eintretende Waschflüssigkeit durch den durchströmenden Gasstrom mitgerissen wird. Aufgrund der vergleichsweise hohen Strömungsgeschwindigkeit des Gasstroms an dieser Stelle erfolgt eine Fragmentierung der Waschflüssigkeit, wobei im Gasstrom mitgeführte luftgetragene Aktivitäten oder Aerosole in die dadurch entstehenden Flüssigkeitströpfchen eingebracht werden. Durch eine anschließende Tröpfchenabscheidung aus dem Gasstrom ist somit die Entfernung eines Großteils der mitgeführten Aerosole oder luftgetragenen Aktivitäten möglich.

Bei dem in der EP 0 285 845 B1 beschriebenen System ist die in Reihe zum Venturiwäscher geschaltete Drosseleinrichtung für einen Betrieb mit so genannter kritischer Entspannung ausgelegt. Bei einer kritischen Entspannung stellen sich die Druckverhältnisse im Leitungssystem, also insbesondere der Druckabfall über die Drosseleinrichtung, derart ein, dass das in der Leitung strömende Medium die Drosseleinrichtung mit Schallgeschwindigkeit durchströmt. Beim System nach der EP 0 285 845 B1 wird dieser Effekt dazu genutzt, im Ansprechfall, also bei einer Druckentlastung des Containments, einen über die Zeit gleichbleibenden Volumendurchsatz in der Druckentlastungsleitung einzustellen. Allerdings könnten dennoch bei kerntechnischen Anlagen, deren Sicherheitshülle auslegungsbedingt gravierende Undichtigkeiten aufweist, gerade bei vergleichsweise lang andauernden Störfallszenarien signifikante luftgetragene Aktivitäten in die Umgebung gelangen. Um einen sicheren weiteren Betrieb solcher Anlagen zu ermöglichen, ist daher auch für solche Anlagen die Einhaltung des für kerntechnische Anlagen international geforderten Sicherheitsstands wünschenswert.

Der Erfindung liegt daher die Aufgabe zugrunde, eine kerntechnische Anlage der oben genannten Art anzugeben, bei der selbst bei auslegungsbedingten Undichtigkeiten der Sicherheitshülle im Falle einer Druckentlastung auch feinste luftgetragene Aktivitäten oder Aerosole mit besonders hoher Zuverlässigkeit im Venturiwäscher zurückgehalten werden, so dass eine Freisetzung an die Umgebung mit besonders hoher Zuverlässigkeit ausgeschlossen ist. Weiterhin soll ein Verfahren zur Druckentlastung einer derartigen kerntechnischen Anlage angegeben werden.

Bezüglich der kerntechnischen Anlage wird diese Aufgabe erfindungsgemäß gelöst, indem in die Druckentlastungsleitung in Reihe eine Gebläseeinrichtung sowie ein in einem Behälter mit einer Waschflüssigkeit angeordneter Venturiwäscher geschaltet sind, wobei die Gebläseeinrichtung und der Venturiwäscher derart dimensioniert sind, dass sich im Betriebszustand der Gebläseeinrichtung im Venturiwäscher eine Strömungsgeschwindigkeit des in der Druckentlastungsleitung geführten Mediums von mehr als 130 m/s, vorzugsweise von mehr als 180 m/s, einstellt.

Die Erfindung geht dabei von der Überlegung aus, dass zur Abscheidung luftgetragener Aktivitäten oder Aerosole in einem Venturiwäscher oder einem Venturirohr durch die Einspeisung von Wasser in das Rohrinnere aufgrund der dort herrschenden Strömungsverhältnisse ein vergleichsweise feiner Tröpfchennebel erzeugt wird, wobei die abzuscheidenden luftgetragenen Aktivitäten oder Aerosole in derartige Tröpfchen eingebracht und somit mit diesen aus dem Gasstrom entfernt werden können. Eine besonders hohe Abscheidewirkung auch für feinste Aerosole ist somit erreichbar, indem die Wahrscheinlichkeit, mit der die Aerosole auf geeignete Wassertröpfchen treffen und in diesen eingeschlossen werden, besonders hoch gehalten wird. Wie sich überraschenderweise herausgestellt hat, steigt gerade bei Venturirohren, in denen in der Art einer passiven Bauweise die Einspeisung der Waschflüssigkeit in das Rohrinnere über den an der Verengungsstelle herrschenden Unterdruck und somit ohne äußere Antriebsmittel gewährleistet ist, die Auftreff- und Einschlusswahrscheinlichkeit auch feinster Aerosole im Tröpfchennebel in erheblichem, weit überproportionalem Maße an, so dass bei sehr hohen Strömungsgeschwindigkeiten des Gasstroms im Venturirohr Abscheideraten für Mischaerosole einer Partikelgröße von etwa 1 µm von mehr als 99,9 % und für vergleichsweise feine Aerosole einer Partikelgröße von weniger als 0,5 µm von 98 % und mehr in der Waschflüssigkeit erreichbar sind. Das Druckentlastungs- und Aktivitätsrückhaltesystem der kerntechnischen Anlage ist daher für die Einhaltung derartig hoher Strömungsgeschwindigkeiten im Druckentlastungsfall ausgelegt.

Um dabei gerade im Hinblick auf die sich bei einem schweren Störfallszenario möglicherweise über den gesamten Verlauf des Störfalls hinweg in großem Umfang ändernden charakteristischen Parameter wie beispielsweise Anlagendruck in jeder Phase eines möglichen Störfalls eine derartig hohe Abscheiderate zu gewährleisten und somit eine Freisetzung kontaminierender Bestandteile in die Umgebung in jeder Phase eines Störfalls in größtmöglichem Umfang zu verhindern, ist das Druckentlastungs- und Aktivitätsrückhaltesystem der kerntechnischen Anlage zudem für einen derartig hohen Abscheidegrad nahezu unabhängig vom im Sicherheitsbehälter der kerntechnischen Anlage anfallenden Gas- und Dampfmengen ausgelegt. Um dies zu gewährleisten, ist die Einstellung der auslegungsgemäß vorgesehenen Strömungsverhältnisse im Venturiwäscher durch die Erzeugung hoher Pressungen durch ein vorgeschaltetes Hochleistungsgebläse vorgesehen.

Die dazu eingesetzte Gebläseeinrichtung ist vorteilhafterweise als Hochleistungsradialventilator mit einer Nenndrehzahl von zumindest 10.000 U/min und einer Pressung von mindestens 200 mbar, vorzugsweise mehr als 500 mbar, ausgestaltet.

Vorteilhafterweise umfasst der Venturiwäscher eine Mehrzahl von Venturirohren. Diese können als so genannte Kurzventurirohre ausgeführt sein, deren Auslässe unterhalb des vorgesehenen Sollpegels der Waschflüssigkeit angeordnet sind, so dass die Venturirohre im Wesentlichen vollständig in die Waschflüssigkeit eingetaucht sind. Vorteilhafterweise ist aber ein vergleichsweise großer Anteil der Venturirohre als so genannte Langventurirohre ausgestaltet, deren Auslässe oberhalb des vorgesehenen Sollpegels der Waschflüssigkeit angeordnet sind. Vorteilhafterweise ist dabei zur Schwerkraft-Tropfenabscheidung eine Gasumlenkung vorgesehen.

Durch primär oberhalb der Waschflüssigkeit ausblasende Venturidüsenrohre kann, insbesondere wegen der bei atmosphärischem Betrieb geringen Gasdichte und der damit verbundenen großen Volumenströme, der die Komponentengröße bestimmende Wasseraufwurf gering gehalten und somit eine besonders hohe Leerrohrgeschwindigkeit in der im Venturiwäschereinrichtung eingestellt werden. Die Folgen sind ein erheblich geringerer Venturiwäscherdurchmesser und eine geringere Komponentenhöhe sowie ein entsprechend reduzierter Verbrauch an Waschflüssigkeit. Durch die damit ermöglichte kompakte Bauweise der Wäschereinrichtung wird auch bei einer hohen Absaugeleistung von beispielsweise mehr als 10 000 m³/h bis 30.000m³/h eine Ausgestaltung von Hochdruckventilator und Wäscher sowie Faserfilter mit Molsieb in lediglich zwei Modulen möglich, beispielsweise in so genannter "skid-mounted"-Bauweise. Hierdurch ergibt sich eine erhebliche Reduktion bei Herstellungs- und Montageaufwand, weil die maschinen- und leittechnische Bestückung der kompletten Einrichtung, inkl. Optimierung, Abnahmeprüfungen etc. bereits im Werk erfolgen kann. Die verwendete freiprogrammierbare, digitale Steuerung und E-Technik kann ebenfalls bereits im Werk getestet und optimiert werden.

Um darüber hinaus eine Sedimentation im Bereich des Behälters, die zu erhöhtem Wartungs- und Pflegebedarf führen könnte, zu verhindern, ist der Venturiwäscher in weiterer vorteilhafter Ausgestaltung für eine vergleichsweise intensive Verwirbelung und Zirkulation der Waschflüssigkeit im Betriebsfall ausgelegt. Dazu ist vorteilhafterweise ein kleiner Anteil der Venturirohre, vorzugsweise bis zu etwa 10 %, mit abwärts gerichteter Auslassrichtung innerhalb des Behälters und unterhalb des Sollpegels der Waschflüssigkeit angeordnet.

Als besonders günstig für die Sicherstellung hoher Abscheideraten hat sich die Einstellung einer vergleichsweise hohen Wasserbeladung im Venturiwäscher von beispielsweise mehr als 5 Liter, vorzugsweise mehr als 10 Liter, Waschflüssigkeit pro Kubikmeter Gas erwiesen. Gerade die Kombination derartig hoher Wasserbeladungen mit den auslegungsgemäß vorgesehenen hohen Strömungsgeschwindigkeiten begünstigt nämlich die zuverlässige Abscheidung in besonderem Maße. Um dies sicherzustellen, weisen die Venturirohre in weiterer vorteilhafter Ausgestaltung eine sich über den Düsenumfang erstreckende Ringschlitzeinspeisung mit einem Öffnungswinkel von 20° bis 85°, vorzugsweise 30° bis 45°, auf. Für eine derartig hohe Wasserbeladung weisen die Venturirohre des Venturiwäschers weiterhin vorteilhafterweise jeweils ein Verhältnis ihrer Kehlenquerschnittsfläche zur Eintrittsfläche für die Waschflüssigkeit von weniger als 10:1, vorzugsweise von etwa 3:1, auf. Die Kehlenquerschnittsfläche gibt dabei die vom Strömungsmedium frei durchströmbare Querschnittsfläche an der Verengungsstelle innerhalb des jeweiligen Venturirohres an.

In besonders vorteilhafter Ausgestaltung sind die Venturirohre des Venturiwäschers derart ausgelegt, dass die passive Waschflüssigkeitsansaugung und -verteilung aufgrund des durch das durchströmende Medium erzeugten Unterdrucks bis in den Kernstrahlbereich im Inneren des Venturirohres sichergestellt ist. Dazu sind die Venturirohre des Venturiwäschers vorteilhafterweise als Rundventurirohre mit einer Kehlenbreite von weniger als etwa 80 mm, vorzugsweise von weniger als etwa 40 mm, oder als Flachventuridüsen mit einer Kehlenbreite von weniger als etwa 100 mm ausgeführt. Zusätzlich oder alternativ weisen die Venturirohre des Venturiwäschers vorteilhafterweise ein Verhältnis von Höhe zu Kehlenbreite von mehr als 20, vorzugsweise von mehr als 50, auf.

Eine besonders kompakte Bauweise für das der kerntechnischen Anlage zugeordnete Druckentlastungs- und Aktivitätsrückhaltesystem mit entsprechend reduziertem Herstellungs- und Montageaufwand ist erreichbar, indem der mit dem Venturiwäscher bestückte Behälter vorteilhafterweise waschflüssigkeitsseitig mit einem weiteren Waschflüssigkeitsspeicher verbunden ist. Damit kann die im Behälter selbst vorgehaltene Menge an Waschflüssigkeit vergleichsweise gering gehalten werden, wobei im Bedarfsfall, also insbesondere bei entstehendem Verbrauch an Waschflüssigkeit, eine bedarfsweise Nachspeisung aus dem weiteren Waschflüssigkeitsspeicher vorgesehen sein kann. Das in diesem Sinne nicht aktive, insbesondere größere, Waschflüssigkeitsreservoir kann hierbei in einem separaten Lagerbehälter bevorratet werden und insbesondere zur Ergänzung von verdampfter Waschflüssigkeit dienen. Der Füllstand im Behälter kann dabei durch Anordnung des weiteren Waschflüssigkeitsspeichers in gleicher geodätischer Höhe oder mit einer Füllstands-Schwimmersteuerung passiv eingestellt sein. Als weiterer Waschflüssigkeitsspeicher können dabei auch insbesondere bereits ohnehin vorgesehene weitere Wasserreservoirs wie beispielsweise Abwasserbehälter, Deionatversorgung oder ähnliches genutzt sein, wobei die bedarfsweise Zuspeisung von Waschflüssigkeit in den Behälter über Gefälle oder mittels Membranpumpen oder Druckluft erfolgen kann.

Eine besonders wirksame Aktivitätsrückhaltung ist erreichbar, indem das der kerntechnischen Anlage zugeordnete Druckentlastungs- und Aktivitätsrückhaltesystem in besonders vorteilhafter Ausgestaltung für eine bedarfsweise Rezirkulation der in der Waschflüssigkeit abgeschiedenen luftgetragenen Aktivitäten oder Aerosole in das Containment hinein ausgelegt ist. Dazu ist der mit dem Venturiwäscher versehene Behälter in besonders vorteilhafter Ausgestaltung waschflüssigkeitsseitig über eine Rückspeiseleitung mit dem Innenraum der Sicherheitshülle der kerntechnischen Anlage verbunden. Durch eine derartige Ausgestaltung kann bedarfsweise, also insbesondere ständig oder in zyklischen Intervallen, die im Behälter befindliche, mit aus dem Gasstrom entfernten Aktivitäten oder Aerosolen belastete Waschflüssigkeit ganz oder teilweise in die Sicherheitshülle hineinverlagert werden, so dass die insgesamt behandlungsbedürftige Aktivität zuverlässig im Containment verbleibt. Dabei kann eine Nachspeisung der Waschflüssigkeit in den Behälter insbesondere aus dem weiteren Waschflüssigkeitsreservoir heraus erfolgen. Durch eine derartige Rezirkulation oder Rückspeisung der Aktivitäten kann die insgesamt in der Waschflüssigkeit enthaltene Aktivitätsmenge und - konzentration besonders gering gehalten werden, so dass beispielsweise auch zum Aktivitätsaustrag in nachgeschaltete Filtereinrichtungen führende Resuspensionseffekte besonders gering gehalten werden können. Dadurch ist insbesondere ein vergleichsweise lang ausgedehnter Ventingbetrieb über mehrere Tage und Wochen, ohne dass die nachfolgende Metallfaserfilternachreinigungseinrichtung durch Resuspensionsaerosole und die Jodabscheidung am Jodsorptionsfilter durch Jodresuspension überlastet werden, begünstigt. Gerade durch die Verwendung der Venturirohre ist im übrigen eine direkte Gaskühlung des durch Nachzerfallswärme und die Kompressionswärme überhitzten Gases erreicht, so dass eine Rückführung zur Saugseite - unter Vermeidung weiterer Kühler /Kühlkreise - ermöglicht wird und so der Unterdruck im Containment einfach geregelt werden kann.

Zur effektiven Organojodabscheidung ist vorteilhafterweise in einem Bypass zum Hauptstrom - ausgelegt für einen Teilstrom von weniger als 50% des Auslegungsdurchsatzes - ein Molekularsieb, beispielsweise belegt mit Silbernitrat oder anderen Siberverbindungen, etc, im Langzeitbetrieb des Rückhaltesystems vorgesehen.

Die Überhitzung des Gasstromes vor Eintritt in das Molekularsieb kann elektrisch oder mittel eines Wärmetauschers, angeordnet in der Leitung zwischen Hochdrucklüfter und Wäscher, erfolgen. Hierdurch wird eine passive und einfache Überhitzung ermöglicht und die eingebrachte Kompressionswärme zu relevanten Teilen aus dem Prozess entfernt, so dass weniger Waschflüssigkeit verdampft und somit eine weitere Komponentenverkleinerung vorgenommen werden kann.

Durch Einsprühen von Prozessflüssigkeit auf der Saugseite des Hochleistungsgebläses kann eine laufende Dekontamination der Zuströmteile von Aerosol- und Jodaktivitäten und eine Reduzierung der Kompressionswärme erfolgen. Hierdurch wird z.B. für Mehrblockanlagen die wirtschaftlich sehr günstige Möglichkeit einer zentralen gemeinsamen Aktivitätsrückhalteeinrichtung mit außenverlegten Verbindungsleitungen zu den verschiedenen Anlagen, ohne dass massive Abschirmmaßnahmen notwendig werden, geschaffen.

Somit wird eine signifikante Verbesserung der Aktivitätsrückhaltung und Gewährleistung des Langzeitbetriebes, insbesondere bei Jod und bei Aerosolen, erreichbar. Weiterhin ist durch die Rückspeisung oder Rezirkulation der im Venturiwäscher abgeschiedenen Aktivitäten die über die Aerosole oder luftgetragenen Aktivitäten auftretende Nachzerfallswärme vom Behälter fern gehalten und in das Containment herein zurück verlagert, so dass die hieraus entstehenden möglichen Belastungen im Behälter, beispielsweise durch Flüssigkeitsverdampfung, besonders gering gehalten werden können. Gerade durch die dadurch erreichbare Vermeidung der Verdampfung von Waschflüssigkeit ergibt sich insgesamt, also auch unter Berücksichtigung der möglicherweise vorgesehenen Nachspeisung von Waschflüssigkeit in den Behälter hinein, ein insgesamt reduzierter Bedarf an Waschflüssigkeit.

Um die Anzahl der erforderlichen, im Hinblick auf erhebliche Sicherheitsanforderungen ausgelegten Durchführungen durch die Sicherheitshülle der kerntechnischen Anlage besonders gering zu halten, ist die Rückspeiseleitung dabei in weiterer vorteilhafter Ausgestaltung über die Druckentlastungsleitung mit dem Innenraum der Sicherheitshülle verbunden. Die Rezirkulation oder Rückspeisung erfolgt dabei durch Strahleinspeisung in den Zentralbereich der Druckentlastungsleitung, so dass im Gegenstrom zum Druckentlastungs-Gasstrom eine Überführung der aktivitätsbeladenen Waschflüssigkeit in das Containment hinein erfolgen kann.

Die Rückverlagerung der aktivitätsbeladenen Waschflüssigkeit erfolgt vorzugsweise kontinuierlich oder diskontinuierlich über eine separate Containmentdurchführung kleinen Durchmessers oder diskontinuierlich duch temporäre Erzeugung eines erhöhten Unterdruckes im Containment und kurze Unterbrechung der Absaugung und Rückspeisung durch die gleiche Durchführung mittels Strahleinspeisung und c> 10m/s - bei langsamen Druckanstieg - aber Erhalt eines Unterdruckes. Der Unterdruck kann in diesem Falle zyklisch erhöht werden.

Um dabei die Rückspeisung in der Art eines vollständig passiven Systems ohne Rückgriff auf externe aktive Komponenten zu ermöglichen, ist der Behälter in weiterer vorteilhafter Ausgestaltung geodätisch zumindest etwa 5 m, vorzugsweise mindestens 10 m, höher liegend als die Austrittsstelle der Druckentlastungsleitung aus der Sicherheitshülle angeordnet. Damit ist die Rückspeisung der aktivitätsbeladenen Waschflüssigkeit durch die Druckentlastungsleitung in das Containment hinein allein aufgrund des geodätischen Drucks in der Wassersäule zwischen Druckentlastungsleitung und Behälter möglich, so dass die Strahlrückspeisung im Gegenstrom zum Gasstrom ohne weitere aktive Hilfsmittel erfolgen kann.

Eine besonders hohe betriebliche Sicherheit ist erreichbar, indem die elektrische Energieversorgung der Systemkomponenten des Druckentlastungs- und Aktivitätsrückhaltesystems, also insbesondere der Gebläseeinrichtung und der dieser zugeordneten Steuerung, unabhängig von der kerntechnischen Anlage aufgebaut ist, so dass auch im Störfall eine zuverlässige Druckentlastung gewährleistet ist. Im Bedarfsfall kann die Bespeisung der Gebläseeinrichtung beispielsweise über einen vom Störfall nicht betroffenen Kraftwerksblock oder über ein mobiles Dieselaggregat mit Generator erfolgen. Besonders günstige Strömungsverhältnisse im Venturiwäscher sind gewährleistet, indem die Gebläseeinrichtung für die Herstellung eines geeignet gewählten Druckgefälles, vorzugsweise eines geringfügigen Unterdrucks von beispielsweise weniger als 5 mbar im Inneren der Sicherheitshülle und eines Überdrucks von etwa 500 mbar auf der Druckseite der Gebläseeinrichtung, ausgelegt ist.

Für eine insgesamt besonders zuverlässige Aktivitätsrückhaltung ist dem Venturiwäscher vorteilhafterweise in der Druckentlastungsleitung ein Abscheidesystem, vorzugsweise umfassend einen Schwerkrafttropfenabscheider und/oder einen Faserabscheider, vorzugsweise mit Fasern > 50µm, insbesondere mit abfallenden Faserstärken, nachgeschaltet. Alternativ oder zusätzlich ist dem Venturiwäscher vorteilhafterweise in der Druckentlastungsleitung ein Metallfaserfilter mit Fasern einer Faserstärke von bis zu etwa 5 µm, vorzugsweise aus Edelstahlfasern oder gesinterten Filterfasern mit Poren- oder Faserdurchmessern von weniger als 5µm, nachgeschaltet. Gerade dadurch ist sichergestellt, dass auch die geringe Menge möglicherweise penetrierender Feinaerosole von < 0,5 µm noch weitgehend zurück gehalten werden können. Die Filterelemente sind vorzugsweise aus Edelstahlfasern hergestellt. Die Feinfilterung kann auch mit gesinterten Faserfiltern mit Porendurchmessern < 2µm erfolgen.

Vorteilhafterweise ist die Waschflüssigkeit in besonderem Maße für eine effektive Rückhaltung von Jod oder jodhaltigen Verbindungen ausgeführt. Dazu ist im Behälter vorteilhafterweise eine Waschflüssigkeit mit einem pH-Wert von mindestens 9 vorgehalten, wobei dieser pH-Wert beispielsweise durch Zugabe von NaOH, anderer Laugen und/oder Natriumthiosulfat erfolgen kann. Die Zudosierung dieser Chemikalien zur Waschflüssigkeit kann vorteilhafterweise durch Ansaugung über eine im Frischwasserstrom befindliche Strahlpumpe aus einem separaten Chemikalienbehälter zur Einstellung einer Konzentration in der Waschflüssigkeit von 0,5 bis 5 Gewichtsprozent erfolgen.

Weiterhin wird zweckmäßigerweise durch eine zusätzliche direkte Eispeisung von kaltem Wasser, komplett oder teilweise über die Rückhalteeinrichtung in den Reaktordruckbehälterbereich, im Gegenstrom zum Ventgas, mittels vorhandener Systeme als einfache Notfallmaßnahmen, wie z. B mittels Feuwehrpumpe oder über andere Systeme, gleichzeitig eine Aktivitätsrezirkulation und Kühlung des Reaktorkernes durch Energieaufnahme erreicht. Durch insbesondere in der frühen Unfallphase höhere Einspeisemengen mit ansteigendem Füllstand im Containment kann hierdurch eine weitere vorteilhafte Verringerung des abzusaugenden Dampf-Gasgemisches und somit gleichzeitig eine Verkleinerung der Abmessungen der Rückhalteeinrichtung oder Absaugeeinrichtung erreicht werden.

Bezüglich des Verfahrens zur Druckentlastung einer kerntechnischen Anlage der genannten Art wird die Aufgabe gelöst, indem der Venturiwäscher mit einer Strömungsgeschwindigkeit des in der Druckentlastungsleitung geführten Mediums von mehr als 130 m/s, vorzugsweise von mehr als 180 m/s, beaufschlagt wird.

Die mit der Erfindung erzielten Vorteile bestehen insbesondere darin, dass durch die gezielte Kombination des Venturiwäschers mit der vorgeschalteten Gebläseeinheit und durch eine geeignete Auslegung dieser Komponenten im Wesentlichen über den gesamten Verlauf eines Störfalls hinweg sichergestellt werden kann, dass der Venturiwäscher mit einer besonders hohen Strömungsgeschwindigkeit des Druckentlastungs-Gasstroms durchströmt wird. Dadurch ist in jedem Fall eine besonders hohe Abscheidewirkung von mehr als 99,5 %, vorzugsweise > 99,9 % der mitgeführten luftgetragenen Aktivitäten oder Aerosole, insbesondere auch unter Berücksichtigung der Feinaerosolfraktion mit einer Partikelgröße von weniger als 0,5 µm, sichergestellt, so dass eine quantitative Rückhaltung in der Flüssigphase gelingt und eine Gesamtabscheidewirkung im Langzeitbetrieb, ohne Überlastung der nachgeschalteten Metallfiltereinheit, von > 99,99% bis > 99,999% erreicht wird, so dass eine Freisetzung von Aktivitäten in die Umgebung besonders zuverlässig vermieden wird.

Das durch den Venturiwäscher und die vorgeschaltete Gebläseeinheit gebildete Druckentlastungs- und Aktivitätsrückhaltesystem stellt dabei selbsttätig in nahezu allen Phasen eines Störfalls einen zuverlässigen Durchfluss durch den Venturiwäscher sicher, wobei zudem bei entsprechend leistungsfähiger Gebläseeinheit eine aktive Atmosphärenabsaugung aus der Sicherheitshülle gewährleistet ist. Gerade bei kerntechnischen Anlagen mit auslegungsbedingt vergleichsweise hoher Leckage oder Undichtigkeit in der Sicherheitshülle kann die Gebläseeinrichtung somit in der Art einer Doppelfunktion zum Abpumpen der bei schweren Strörfällen entstehenden Containment-Atmosphärengase - bei Erhaltung eines Unterdruckes im Containment-und Rückführung der Aktivitäten in der Flüssigphase in das Containment dienen, so dass auch bei derartigen undichten Containments im Bedarfsfall ein zuverlässiger Betrieb ohne Belastung der Umgebung vorgenommen werden kann.

Das Verfahren und die Einrichtungen werden vorzugsweise dazu benutzt, die bei Havariezuständen mit Kernschmelze durch die freiwerdende Restwärme entstehenden Gase oder Dämpfe, inkl. der Leckagen, bei leichtem Unterdruck des Containment gegenüber der Umgebung, komplett abzusaugen und vor der Abgabe an die Umgebung nahezu vollständig von luftgetragenen Aktivitäten zu reinigen. Die zurückgehaltenen Aktivitäten werden weiterhin kurzfristig in das Containment rückgeführt. Durch das Hochdruckgebläse wird zudem infolge der konstanten Volumenstrombeaufschlagung der Venturis eine gleichmäßig hohe Venturigeschwindigkeit erreicht, ohne dass eine aufwändige Höhenstaffelung von Venturirohren zur Teillastabdeckung notwendig ist. Durch die Kombination der Hochgeschwindigkeits-Venturiwäschereinrichtung mit Rückführung, kombiniert mit den nachgeschalteten Metallfaserfiltern, kann auch im Langzeitbetrieb, unabhängig von der Aerosolkonzentration im Containment, ein Gesamtabscheidegrad von > 99,99 bis 99,999% gewährleistet werden.

Ein Ausführungsbeispiel der Erfindung wird anhand einer Zeichnung näher erläutert. Darin zeigen:
- Fig. 1: schematisch eine kerntechnische Anlage mit zugeordnetem Druckentlastungs- und Aktivitätsrückhaltesystem,
- Fig. 2: einen Behälter mit Venturiwäscher, und
- Fig. 3: eine Einspeisestelle der Anlage nach Fig. 1 im Ausschnitt.

Gleiche Teile sind in allen Figuren mit denselben Bezugszeichen versehen.

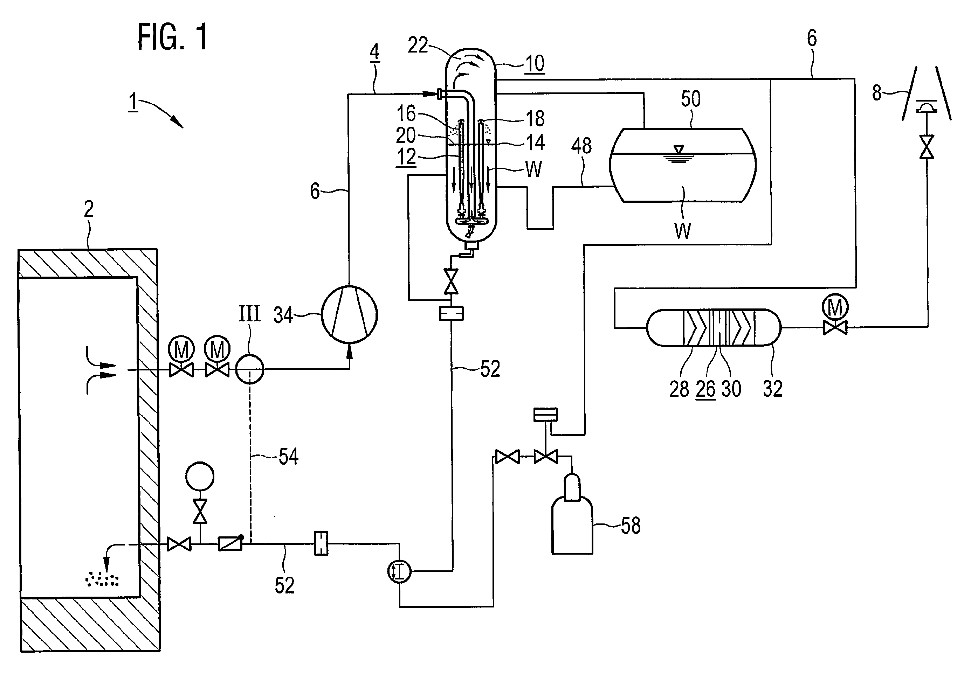

Die kerntechnische Anlage 1 nach Fig. 1 umfasst eine auch als Containment bezeichnete Sicherheitshülle 2, die die zur Elektrizitätserzeugung vorgesehenen nuklearen Komponenten und weitere Systemkomponenten enthält. Um auch für den Fall eines vergleichsweise gravierenden Störfalls, bei dem infolge von innerhalb der Sicherheitshülle 2 ablaufenden Vorgängen mit einem starken Druckanstieg innerhalb der Sicherheitshülle 2 gerechnet werden muss, strukturelle Beeinträchtigungen oder Instabilitäten der Sicherheitshülle 2 sicher ausschließen zu können, ist die kerntechnische Anlage 1 mit einem an die Sicherheitshülle 2 angeschlossenen Druckentlastungs- und Aktivitätsrückhaltesystem 4 ausgerüstet. Dieses ermöglicht im Bedarfsfall ein gezieltes und kontrolliertes Ablassen von Containment-Atmosphäre, auch als Venting bezeichnet, aus der Sicherheitshülle 2 in deren Umgebung.

Das Druckentlastungs- und Aktivitätsrückhaltesystem 4 umfasst eine an die Sicherheitshülle 2 angeschlossene Druckentlastungsleitung 6, die auslassseitig an einen Abblasekamin 8 angeschlossen ist. Zur Vermeidung einer Kontamination der Umgebung der kerntechnischen Anlage 1 im Falle eines Ventings oder eines Ablassens von Containment-Atmosphäre ist das Druckentlastungs- und Aktivitätsrückhaltesystem 4 für eine zuverlässige Rückhaltung auch von in der Containment-Atmosphäre enthaltenen luftgetragenen Aktivitäten oder Aerosolen ausgelegt. Dazu umfasst das Druckentlastungs- und Aktivitätsrückhaltesystem 4 einen als Filtereinrichtung für derartige luftgetragene Aktivitäten oder Aerosole vorgesehenen Nasswäscher 10.

Der Nasswäscher 10 umfasst seinerseits einen in die Druckentlastungsleitung 6 geschalteten Venturiwäscher 12, der in einem Behälter 14 mit einer Waschflüssigkeit W angeordnet ist. Der Venturiwäscher 12 umfasst eine Anzahl von Venturirohren 16, die mit ihren Auslässen 18 in einen im Behälter 14 oberhalb des Sollpegels 20 der Waschflüssigkeit W befindlichen Gasraum 22 münden. Der Gasraum 22 ist seinerseits ausgangsseitig an ein weiteres Teilstück der Druckentlastungsleitung 6 angeschlossen, das über eine Filtereinrichtung 26 mit dem Abblasekamin 8 verbunden ist. Die Filtereinrichtung 26 umfasst ihrerseits einen Metallfaserfilter 28, eine Zwischendrossel 30 sowie nachfolgend ein Molekularsieb 32. Der Metallfaserfilter 28 ist dabei insbesondere als Feinfilter mit Faserfiltermatten mit abfallendem Faserdurchmesser von 50 µm bis ungefähr 1 µm ausgestaltet, so dass insbesondere auch penetrierende Feinaerosole mit einer Partikelgröße von weniger als 0,5 µm effektiv zurück gehalten werden können.

Das Druckentlastungs- und Aktivitätsrückhaltesystem 4 der kerntechnischen Anlage 1 ist für eine besonders zuverlässige Aktivitätsrückhaltung und insbesondere für einen Abscheidegrad auch vergleichsweise feinkörniger Aerosole mit einer Partikelgröße von weniger als 0,5 µm von 98 % oder darüber ausgelegt. Zu diesem Zweck und für eine im Bedarfsfall zuverlässige aktive Atmosphärenabsaugung aus der Sicherheitshülle 2 ist dem Venturiwäscher 12 in der Druckentlastungsleitung 6 eine leistungsstarke Gebläseeinrichtung 34, auch als "Turbo-Blower" bezeichnet, vorgeschaltet. Als Auslegungsziel ist dabei zugrunde gelegt, dass im Ansprechfall der Venturiwäscher 12 vom Druckentlastungs-Gasstrom mit einer besonders hohen Strömungsgeschwindigkeit von mehr als 150 m/s, insbesondere von mehr als 200 m/s, durchströmt wird. Wie sich nämlich herausgestellt hat, ist bei derartig hohen Strömungsgeschwindigkeiten ein nahezu sprunghafter Anstieg in der Abscheiderate erzielbar, wobei insbesondere auch feine und feinste Aerosolpartikel in Waschflüssigkeitströpfchen eingebunden und somit abgeschieden werden. Durch geeignete Wahl insbesondere der Strömungsquerschnitte und der Leistung der Gebläseeinrichtung 34 ist dabei sichergestellt, dass in nahezu allen Phasen eines Störfallszenarios eine derartig hohe Strömungsgeschwindigkeit im Venturiwäscher 12 anliegt. Zur Gewährleistung entsprechend hoher Systemdichtheiten wird z. B. die Gebläsewellendurchführung zusätzlich mit einer Sperrgasdichtung ausgeführt, die permanent beaufschlagt wird.

Zusätzlich ist damit erreicht, dass im Ansprechfall die Atmosphäre aus der Sicherheitshülle 2 aktiv durch die Gebläseeinrichtung 34 abgesaugt wird, so dass selbst bei Leckagen oder Undichtigkeiten der Sicherheitshülle 2 eine Freisetzung von Containment-Atmosphäre an die Umgebung sicher vermieden ist. Aus Sicherheitsgründen ist dabei die Energieversorgung der Gebläseeinrichtung 34 unabhängig von der kerntechnischen Anlage 1 gehalten. Alternativ kann bei Mehrblockanlagen eine redundante Energieversorgung der Gebläseeinrichtung 34 vorgesehen sein, wobei im Bedarfsfall die Bespeisung der Gebläseeinrichtung 34 über den von einem Störfall jeweils nicht betroffenen Kraftwerksblock erfolgen kann. Die Stromversorgung wird deshalb separat, das heißt auch unabhängig von der bestehenden Schaltanlage und Leittechnik, aufgebaut. Als weiteres Auslegungskriterium ist zudem die Leistung der Gebläseeinrichtung 34 derart gewählt, dass unter Berücksichtigung der anfallenden Gas- und Dampfmengen und ihrer eventuellen Undichtigkeiten oder Leckagen im Einsatzfall im Innenraum der Sicherheitshülle 2 ein geringer Unterdruck von z. B. weniger als 5 mbar und auf der Druckseite der Gebläseeinrichtung 34 ein Überdruck von etwa 500 mbar steht.

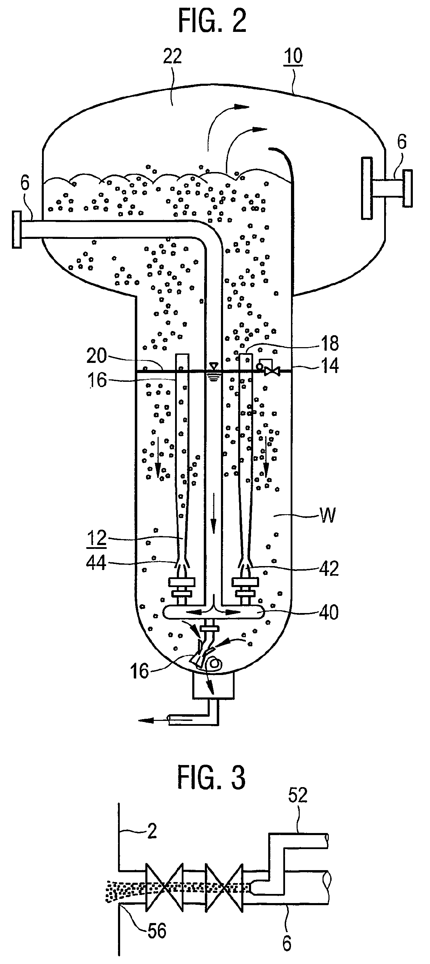

Wie in der vergrößerten Darstellung nach Fig. 2 erkennbar ist, umfasst der Venturiwäscher 12 eine Mehrzahl von Venturirohren 16. Die Venturirohre 16 sind dabei gasstromseitig von einem gemeinsamen, eingangsseitig mit der Druckentlastungsleitung 6 verbundenen Zuführsystem 40 bespeist. Ein vergleichsweise großer Anteil der Venturirohre 16 ist als so genannte Langventurirohre ausgebildet, die mit ihren Auslässen 18 oberhalb des vorgesehenen Sollpegels 20 der Waschflüssigkeit W angeordnet sind und somit in der Art einer "frei ausblasenden" Anordnung direkt in den Gasraum 22 münden. Des Weiteren ist aber auch vorgesehen, eine Verschmutzung oder eine Beeinträchtigung des Betriebsverhaltens des Venturiwäschers 12 durch Ablagerung oder Sedimentation zu verhindern, indem ein vergleichsweise kleiner Anteil, nämlich weniger als 10 %, der Venturirohre 16 schräg abwärts ausgerichtet sind. Durch diese Venturiwirbler wird eine intensive Zirkulation der Waschflüssigkeit W innerhalb des Behälters 14 erreicht, so dass Sedimentation sicher vermieden ist.

Insbesondere die als Langventurirohre ausgeführten Venturirohre 16 sind für eine vergleichsweise hohe Wasserbeladung des behandlungsbedürftigen Gasstroms von mehr als 5, insbesondere mehr als 10, Liter Waschflüssigkeit W pro Kubikmeter Gas ausgeführt. Dazu ist in den Venturirohren 16 im Eintrittsbereich 42 für die Waschflüssigkeit W eine Ringschlitzeinspeisung über den Düsenumfang in einem Öffnungswinkel von 30° bis 45° vorgesehen. Die Dimensionierung ist dabei derart vorgenommen, dass das Verhältnis der an der Verengungsstelle 44 oder so genannten Kehle jedes Venturirohres 16 ermittelten Kehlenquerschnittsfläche zur an der Ringschlitzeinspeisung ermittelten Eintrittsfläche für die Waschflüssigkeit W etwa 3:1 beträgt. Die Verengungsstelle 44 ist im Übrigen auch diejenige Stelle, an der der durchströmende Gasstrom seine maximale Strömungsgeschwindigkeit aufweist; demzufolge wird an der Verengungsstelle 44 auch die für die Auslegung und Abstimmung des Venturiwäschers 12 und der berücksichtigte Strömungsgeschwindigkeit ermittelt.

Im Ausführungsbeispiel sind die als Langventurirohre ausgeführten Venturirohre 16 als Rundventurirohre mit einer Kehlenbreite von weniger als 40 mm ausgeführt, so dass bei passiver Waschflüssigkeitsansaugung und -verteilung aufgrund des durch das durchströmende Medium erzeugten Unterdrucks eine Einspeisung der Waschflüssigkeit W bis in den Kernstrahlbereich im Inneren des jeweiligen Venturirohres 16 sichergestellt ist. Die Venturirohre 16 weisen darüber hinaus ein Verhältnis von Höhe zu Kehlenbreite von mehr als 50 auf.

Wie weiterhin aus Fig. 1 erkennbar ist, ist zur Ermöglichung einer besonders kompakten Bauweise des Behälters 14 eine mehrkomponentige Bevorratung von Waschflüssigkeit W vorgesehen. Einerseits wird im Behälter 14 Waschflüssigkeit W vorgehalten, in der der Venturiwäscher 12 angeordnet ist. Zusätzlich und ergänzend hierzu ist der Behälter 14 aber waschflüssigkeitsseitig über eine Zuspeiseleitung 48 mit einem weiteren Waschflüssigkeitsspeicher 50 verbunden. Es kann sich beim Waschflüssigkeitsspeicher 50 um ein eigens hierfür konzipiertes Behältnis handeln, das für eine zuverlässige Nachspeisung von Waschflüssigkeit W in den Behälter 14 hinein geodätisch geeignet hoch liegend gewählt ist, wobei sich der Sollpegel 20 der Waschflüssigkeit W im Behälter 14 durch die im weiteren Waschflüssigkeitsspeicher 50 eingestellte Höhe der dort vorgehaltenen Waschflüssigkeit W einstellt. Alternativ kann als weiterer Waschflüssigkeitsspeicher 50 aber auch ein ohnehin vorgesehener Wassertank wie beispielsweise ein Abwasserbehälter, eine Deionatversorgung oder ähnliches vorgesehen sein, wobei die bedarfsweise Nachspeisung von Waschflüssigkeit W in den Behälter 14 hinein über geeignet gewählte Gefälle oder beispielsweise mittels Membranpumpen oder Druckluft erfolgen kann.

Weiterhin ist der Behälter 14 waschflüssigkeitsseitig über eine Rückspeiseleitung 52 mit Durchsatzbegrenzung und Überlaufleitung mit dem Innenraum der Sicherheitshülle 2 verbunden. Dadurch ist in der Art einer Rezirkulation oder Rückspeisung eine Rückführung von mit luftgetragenen Aktivitäten oder mit Aerosolen belasteter Waschflüssigkeit W aus dem Behälter 14 heraus in die Sicherheitshülle 2 hinein ermöglicht. Damit kann durch ständige oder zyklische Rezirkulation derartig beladener Waschflüssigkeit W die Aktivität in ihrer Gesamtheit besonders zuverlässig im Inneren des Containments oder der Sicherheitshülle 2 gehalten werden, so dass die Gefahr eines Austrags in die Umgebung besonders gering gehalten ist. Gerade durch eine derartige Rezirkulation der Waschflüssigkeit W kann im Übrigen auch die über die zurückgehaltenen Aktivitäten importierte Nachzerfallswärme konsequent aus dem Behälter 14 in die Sicherheitshülle 2 hinein zurück verlagert werden, so dass die Verdampfung von Waschflüssigkeit W im Behälter 14 besonders gering gehalten ist. Trotz der Rezirkulation von Waschflüssigkeit W in den Innenraum der Sicherheitshülle 2 hinein und eine Nachspeisung von Waschflüssigkeit W aus dem weiteren Waschflüssigkeitsspeicher 50 kann damit infolge der vermiedenen Verdampfung der insgesamt anfallende Verbrauch an Waschflüssigkeit W besonders gering gehalten werden.

Wie durch die strichlierte Linie 54 angedeutet, kann die Rückspeiseleitung 52 über die Druckentlastungsleitung 6 mit dem Innenraum der Sicherheitshülle 2 verbunden sein. Wie in der ausschnittsweisen Vergrößerung in Fig. 3 dargestellt, erfolgt die Rezirkulation dabei in der Art einer passiven Ausgestaltung im Gegenstrom zum aus der Sicherheitshülle 2 austretenden Gasstrom, wobei keine zusätzliche Durchführung durch die Sicherheitshülle 2 benötigt wird. Um dabei einen ausreichenden Einspeisedruck für die rückzuspeisende Waschflüssigkeit W sicherzustellen, ist im Ausführungsbeispiel der Behälter 14 mit der darin befindlichen Waschflüssigkeit W in ausreichender geodätischer Höhe, nämlich etwa 10 m oberhalb der Austrittsstelle 56 der Druckentlastungsleitung 6 aus der Sicherheitshülle 2, angeordnet. Allein durch den geodätischen Druck in der Wassersäule in der Rückspeiseleitung 52 ist somit in der Art eines passiven Systems ein ausreichender Rückspeisedruck für die Waschflüssigkeit W in das Containment oder die Sicherheitshülle 2 hinein gewährleistet. Alternativ kann auch eine zyklische Rückspeisung durch Schließen der Austrittsarmatur bei Überdruck im Containment oder die Nutzung einer separaten Kleinleitung mit geringem unterkritischem Querschnitt und entsprechender Beaufschlagung mit Pumpen, beispielsweise einer aus einem von der Stromversorgung unabhängigen Gasspeicher gespeiste Druckluftmembranpumpe oder einer Kreiselpumpe, vorgesehen sein. Die hierfür notwendigen Komponenten, beispielsweise ein Druckluftreservoir 58, und eigenmedium-gesteuertes Membranventil sind in Fig. 1 schematisch dargestellt.

Für eine zuverlässige Jodrückhaltung ist der pH-Wert in der Waschflüssigkeit W im Behälter 14 auf einen alkalischen Wert, insbesondere einen Wert von mehr als 9, eingestellt. Dazu erfolgt eine bedarfsweise Zudosierung von NaOH, anderer Laugen und/oder Natriumthiosulfat von > 0,5 bis 5 Gew.% durch Ansaugung über eine im Frischwasserstrom befindliche Strahlpumpe.

### Bezugszeichenliste

- 1: kerntechnische Anlage
- 2: Sicherheitshülle (Containment)
- 4: Druckentlastungs- und Aktivitätsrückhaltesystem
- 6: Druckentlastungsleitung
- 8: Abblasekamin
- 10: Nasswäscher
- 12: Venturiwäscher
- 14: Behälter
- 16: Venturirohre
- 18: Auslass
- 20: Sollpegel
- 22: Gasraum
- 24: Gebläseeinrichtung
- 26: Filtereinrichtung
- 28: Metallfaserfilter
- 30: Zwischendrossel
- 32: Molekularsieb
- 34: Gebläseeinrichtung
- 40: Zuführsystem
- 42: Eintrittsbereich
- 44: Verengungsstelle
- 48: Zuspeiseleitung
- 50: Waschflüssigkeitsspeicher
- 52: Rückspeiseleitung
- 54: strichlierte Linie
- 56: Austrittsstelle
- 58: Druckluftreservoir

- W: Waschflüssigkeit

## Patentansprüche

1. Kerntechnische Anlage (1) mit einer Sicherheitshülle (2), an die eine Druckentlastungsleitung (6) angeschlossen ist, in die in Reihe eine Gebläseeinrichtung (34) sowie ein in einem Behälter (14) mit einer Waschflüssigkeit (W) angeordneter Venturiwäscher (12) geschaltet sind, wobei die Gebläseeinrichtung (34) und der Venturiwäscher (12) derart dimensioniert sind, dass sich im Betriebszustand der Gebläseeinrichtung (34) im Venturiwäscher (12) eine Strömungsgeschwindigkeit des in der Druckentlastungsleitung (6) geführten Mediums von mehr als 130 m/s, vorzugsweise von mehr als 180 m/s, einstellt.

2. Kerntechnische Anlage (1) nach Anspruch 1, deren Gebläseeinrichtung (34) als Hochleistungsradialventilator mit einer Nenndrehzahl von mehr als 10.000U/min und einer Pressung von mindestens 200 mbar, vorzugsweise mehr als 500 mbar, ausgebildet ist.

3. Kerntechnische Anlage (1) nach Anspruch 1 oder 2, bei der der Venturiwäscher (12) eine Mehrzahl von Venturirohren (16) umfasst, von denen ein vergleichsweise großer Anteil mit ihren Auslässen (18) oberhalb des vorgesehenen Sollpegels (20) der Waschflüssigkeit (W) angeordnet ist, und von denen ein vergleichsweise kleiner Anteil, vorzugsweise bis zu etwa 10 %, mit abwärts gerichteter Auslassrichtung angeordnet ist.

4. Kerntechnische Anlage (1) nach einem der Ansprüche 1 bis 3, bei der die Venturirohre (16) des Venturiwäschers (12) jeweils ein Verhältnis ihrer Kehlenquerschnittsfläche zur Eintrittsfläche für die Waschflüssigkeit (W) von weniger als 10:1, vorzugsweise von etwa 3:1, aufweisen.

5. Kerntechnische Anlage (1) nach einem der Ansprüche 1 bis 4, bei der die Venturirohre (16) des Venturiwäschers (12) als Rundventurirohre mit einer Kehlenbreite von weniger als etwa 80 mm, vorzugsweise von weniger als etwa 40 mm, oder als Flachventurirohre mit einer Kehlenbreite von weniger als etwa 100 mm ausgeführt sind.

6. Kerntechnische Anlage (1) nach einem der Ansprüche 1 bis 5, bei der die Venturirohre (16) des Venturiwäschers (12) ein Verhältnis von Höhe zu Kehlenbreite von mehr als 20, vorzugsweise; von mehr als 50, aufweisen.

7. Kerntechnische Anlage (1) nach einem der Ansprüche 1 bis 6, deren Behälter (14) waschflüssigkeitsseitig mit einem Waschflüssigkeitsspeicher (50) verbunden ist.

8. Kerntechnische Anlage (1) nach einem der Ansprüche 1 bis 7, deren Behälter (14) waschflüssigkeitsseitig über eine Rückspeiseleitung (52) mit dem Innenraum der Sicherheitshülle (2) verbunden ist.

9. Kerntechnische Anlage (1) nach Anspruch 8, deren Rückspeiseleitung (52) über die Druckentlastungsleitung (6) mit dem Innenraum der Sicherheitshülle (2) verbunden ist.

10. Kerntechnische Anlage (1) nach Anspruch 9, deren Behälter (14) geodätisch zumindest etwa 5 m, vorzugsweise mindestens 10 m, höher liegend als die Austrittsstelle (56) der Druckentlastungsleitung (6) aus der Sicherheitshülle (2) angeordnet ist.

11. Kerntechnische Anlage (1) nach einem der Ansprüche 1 bis 10, bei der die elektrische Energieversorgung der Systemkomponenten des Druckentlastungs- und Aktivitätsrückhaltesystems (4) inkl. Steuerung unabhängig von der kerntechnischen Anlage (1) aufgebaut ist.

12. Kerntechnische Anlage (1) nach einem der Ansprüche 1 bis 11, bei der die Gebläseeinrichtung (34) derart dimensioniert ist, dass unter Berücksichtigung der bei Störfällen im Kernbereich entstehenden Gase und Dampfgemische und Leckagen im Einsatzfall im Innenraum der Sicherheitshülle (2) ein Unterdruck von weniger als 5 mbar und auf der Druckseite der Gebläseeinrichtung (34) ein Überdruck von etwa 500 mbar entsteht.

13. Kerntechnische Anlage (1) nach einem der Ansprüche 1 bis 12, bei der dem Venturiwäscher (12) in der Druckentlastungsleitung (6) ein Schwerkrafttropfenabscheider und/oder ein Faserabscheider, vorzugsweise mit Fasern mit einer Stärke von mehr als 50 µm, insbesondere mit abfallenden Faserstärken, nachgeschaltet ist.

14. Kerntechnische Anlage (1) nach einem der Ansprüche 1 bis 13, bei der dem Venturiwäscher (12) in der Druckentlastungsleitung (6) ein Metallfaserfilter (28) mit einer Faserstärke von bis zu 5 µm, vorzugsweise aus Edelstahlfasern oder gesinterten Filterfasern mit Poren- oder Faserdurchmessern kleiner als 5µm, nachgeschaltet ist.

15. Kerntechnische Anlage (1) nach einem der Ansprüche 1 bis 14, bei der an die Druckentlastungsleitung (6) eine Umführungsleitung, vorzugsweise belegt mit Silberverbindungen, angeschlossen ist, in die parallel zum Hauptstrom ein Erhitzer mit Molekularsieb zur Filterung eines Volumenstromes von bis zu 50% des Auslegungsdurchsatzes geschaltet ist.

16. Kerntechnische Anlage (1) nach einem der Ansprüche 1 bis 15, in deren Behälter (14) eine Waschflüssigkeit (W) mit einem pH-Wert von mindestens 9 vorgehalten ist.

17. Verfahren zur Druckentlastung einer kerntechnischen Anlage (1) nach einem der Ansprüche 1 bis 16, bei der Venturiwäscher (12) mit einer Strömungsgeschwindigkeit des in der Druckentlastungsleitung (6) geführten Mediums von mehr als 130 m/s, vorzugsweise von mehr als 180 m/s, beaufschlagt wird.

## Claims

1. Nuclear facility (1) having a containment structure (2) to which a pressure-relief conduit (6) is connected to which a blower (34) as well as a venturi scrubber (12) arranged in a container (14) with a scrubbing liquid (W) are connected in series, the blower (34) and the venturi scrubber (12) being dimensioned such that in operating condition of the blower (34), a flow velocity of the medium flowing in the pressure-relief conduit (6) of more than 130 m/s, preferably of more than 180 m/s, develops.

2. Nuclear facility (1) according to claim 1, whose blower (34) is designed as a high-performance radial ventilator with a nominal speed of more than 10,000 rpm and a pressure of at least 200 mbar, preferably of more than 500 mbar.

3. Nuclear facility (1) according to claim 1 or 2, in which the venturi scrubber (12) comprises a plurality of venturi tubes (16), the outlets (18) of a relatively large part of which being arranged above the specified nominal level (20) of the scrubbing liquid (W), and a relatively small part of which, preferably up to approx. 10 %, being arranged with a downward outlet direction.

4. Nuclear facility (1) according to any of claims 1 to 3, in which the ratio between the cross-sectional area of the gorge and the area of entry of the scrubbing liquid (W) of each of the venturi tubes (16) of the venturi scrubber (12) is less than 10:1, preferably approx. 3:1.

5. Nuclear facility (1) according to any of claims 1 to 4, in which the venturi tubes (16) of the venturi scrubber (12) are designed as round venturi tubes with a gorge width of less than approx. 80 mm, preferably of less than approx. 40 mm, or as flat venturi tubes with a gorge width of less than approx. 100 mm.

6. Nuclear facility (1) according to any of claims 1 to 5, in which the ratio between the height and the gorge width of the venturi tubes (16) of the venturi scrubber (12) is larger than 20, preferably larger than 50.

7. Nuclear facility (1) according to any of claims 1 to 6, whose container (14) is connected on the scrubbing-fluid side to a scrubbing-fluid reservoir (50).

8. Nuclear facility (1) according to any of claims 1 to 7, whose container (14) is connected on the scrubbing-fluid side by means of a return conduit (52) to the interior of the containment structure (2).

9. Nuclear facility (1) according to claim 8, whose return conduit (52) is connected by means of the pressure-relief conduit (6) to the interior of the containment structure (2).

10. Nuclear facility (1) according to claim 9, whose container (14) is situated geodetically at least approx. 5 m, preferably at least 10 m, higher than the outlet point (56) of the pressure-relief conduit (6) from the containment structure (2).

11. Nuclear facility (1) according to any of claims 1 to 10, in which the electric power supply of the components of the pressure relief and activity retention system (4) including the control system is set up independently of the nuclear facility (1).

12. Nuclear facility (1) according to any of claims 1 to 11, in which the blower (34) is dimensioned such that, taking into account the gases and steam mixtures and leakages arising in the core area in hazardous incidents, a negative pressure of less than 5 mbar will develop in case of application in the interior of the containment structure (2) and an overpressure of approx. 500 mbar, on the pressure side of the blower (34).

13. Nuclear facility (1) according to any of claims 1 to 12, in which a gravity mist collector and/or a fiber separator, preferably with fibers of a thickness of more than 50 µm, in particular with decreasing fiber thicknesses, is connected downstream of the venturi scrubber (12) in the pressure-relief conduit (6).

14. Nuclear facility (1) according to any of claims 1 to 13, in which a metal-fiber filter (28) with a fiber thickness of up to 5 µm, preferably made of stainless-steel fibers or sintered filter fibers with pore or fiber diameters smaller than 5 µm, is connected downstream of the venturi scrubber (12) in the pressure-relief conduit (6).

15. Nuclear facility (1) according to any of claims 1 to 14, in which a bypass, preferably surfaced with silver compounds, is connected to the pressure-relief conduit (6), a heater with molecular sieve for filtering a volume flow rate of up to 50% of the design flow rate being inserted into said bypass, in parallel to the main flow.

16. Nuclear facility (1) according to any of claims 1 to 15, in whose container (14) a scrubbing liquid (W) with a pH value of at least 9 is provided.

17. Method for pressure relief of a nuclear facility (1) according to any of claims 1 to 16, in which the venturi scrubber (12) is charged with a flow velocity of the medium flowing in the pressure-relief conduit (6) of more than 130 m/s, preferably of more than 180 m/s.

## Revendications

1. Installation nucléaire (1) ayant une enceinte de confinement (2) à laquelle est raccordée une conduite de décompression (6) à laquelle sont raccordés en série un dispositif soufflant (34) ainsi qu'un laveur à Venturi (12) ménagé dans un récipient (14) contenant un liquide de lavage (W), le dispositif soufflant (34) et le laveur à Venturi (12) étant dimensionnés de façon qu'il se produise, en fonctionnement du dispositif soufflant (34), une vitesse d'écoulement du milieu coulant dans la conduite de décompression (6) de plus de 130 m/s, de préférence de plus de 180 m/s.

2. Installation nucléaire (1) d'après la revendication 1, dont le dispositif soufflant (34) est conçu comme un ventilateur radial de haute capacité avec une vitesse nominale de plus de 10.000 tr/min et une pression d'au moins 200 mbar, de préférence de plus de 500 mbar.

3. Installation nucléaire (1) d'après la revendication 1 or 2, dans laquelle le laveur à Venturi (12) comprend un pluralité de tubes de Venturi (16), les sorties (18) d'une partie relativement grande desquels étant ménagées au-dessus du niveau nominal prévu (20) du liquide de lavage (W), et une partie relativement petite desquels, de préférence jusqu'à environ 10 %, étant ménagée avec une direction de sortie vers le bas.

4. Installation nucléaire (1) d'après l'une quelconque des revendications 1 à 3, dans laquelle le rapport entre la superficie de la section de la gorge et la superficie d'entrée du liquide de lavage (W) de chacun des tubes de Venturi (16) du laveur à Venturi (12) est inférieur à 10:1, de préférence environ 3:1.

5. Installation nucléaire (1) d'après l'une quelconque des revendications 1 à 4, dans laquelle les tubes de Venturi (16) du laveur à Venturi (12) sont conçus comme des tubes de Venturi rondes avec une largeur de gorge de moins d'environ 80 mm, de préférence de moins d'environ 40 mm, ou comme des tubes de Venturi plats avec une largeur de gorge de moins d'environ 100 mm.

6. Installation nucléaire (1) d'après l'une quelconque des revendications 1 à 5, dans laquelle le rapport entre la hauteur et la largeur de gorge des tubes de Venturi (16) du laveur à Venturi (12) est supérieur à 20, de préférence supérieur à 50.

7. Installation nucléaire (1) d'après l'une quelconque des revendications 1 à 6, dont le récipient (14) est raccordé du côté du liquide de lavage à un réservoir (50) de liquide de lavage.

8. Installation nucléaire (1) d'après l'une quelconque des revendications 1 à 7, dont le récipient (14) est raccordé du côté du liquide de lavage, au moyen d'une conduite de retour (52) à l'intérieur de l'enceinte de confinement (2).

9. Installation nucléaire (1) d'après la revendication 8, dont la conduite de retour (52) est raccordé au moyen de la conduite de décompression (6) à l'intérieur de l'enceinte de confinement (2).

10. Installation nucléaire (1) d'après la revendication 9, dont le récipient (14) se trouve géodésiquement d'au moins environ 5 m, de préférence d'au moins 10 m, plus haut que le point de sortie (56) où la conduite de décompression (6) sort de l'enceinte de confinement (2).

11. Installation nucléaire (1) d'après l'une quelconque des revendications 1 à 10, dans laquelle l'alimentation en énergie électrique des composants du système de décompression et de désactivation des activités (4) y compris le système de commande est constituée indépendamment de l'installation nucléaire (1).

12. Installation nucléaire (1) d'après l'une quelconque des revendications 1 à 11, dans laquelle le dispositif soufflant (34) est dimensionné de façon que, compte tenu des gaz et des mélanges de vapeurs et des fuites qui se produisent dans la zone du coeur en cas d'un incident anormal, un vide partiel de moins de 5 mbar se produise en cas d'application à l'intérieur de l'enceinte de confinement (2) et une surpression d'environ 500 mbar se produise du côté de pression du dispositif soufflant (34).

13. Installation nucléaire (1) d'après l'une quelconque des revendications 1 à 12, dans laquelle un séparateur de gouttes actionné par gravité et/ou un séparateur à fibres, de préférence avec des fibres d'une épaisseur de plus de 50 µm, en particulier avec des épaisseurs de fibre décroissantes, est raccordé en aval du laveur à Venturi (12) dans la conduite de décompression (6).

14. Installation nucléaire (1) d'après l'une quelconque des revendications 1 à 13, dans laquelle un filter de fibres métalliques (28) d'une épaisseur de fibres de jusqu'à 5 µm, de préférence fait de fibres en acier spécial ou de fibres de filtrage frittées de diamètres de pores ou de fibres inférieurs à 5 µm, est raccordé en aval du laveur à Venturi (12) dans la conduite de décompression (6).

15. Installation nucléaire (1) d'après l'une quelconque des revendications 1 à 14, dans laquelle un branchement en dérivation, de préférence garni de composés d'argent, est raccordé à la conduite de décompression (6), un réchauffeur avec un tamis moléculaire pour filtrer un débit volumétrique de jusqu'à 50% du débit nominal étant inséré dans ce branchement en dérivation, en parallàle au flux principal.

16. Installation nucléaire (1) d'après l'une quelconque des revendications 1 à 15, dans le récipient (14) de laquelle se trouve un liquide de lavage (W) avec une valeur pH d'au moins 9.

17. Méthode de décompression d'une installation nucléaire (1) d'après l'une quelconque des revendications 1 à 16, dans laquelle le laveur à Venturi (12) est alimenté d'une vitesse d'écoulement du milieu coulant dans la conduite de décompression (6) de plus de 130 m/s, de préférence de plus de 180 m/s.
